# EUROPÄISCHE PATENTSCHRIFT

(11) **EP 2 483 206 B1**
(45) Veröffentlichungstag und Bekanntmachung des Hinweises auf die Patenterteilung: **29.03.2017**
(21) Anmeldenummer: 10730419.8
(22) Anmeldetag: 29.06.2010
(51) Int. Cl.: C02F 1/20, C05C 3/00, C05F 3/00, B01D 3/10, B01D 19/00, C02F 101/16, C02F 103/20

(54) **VERFAHREN ZUR ENERGETISCH OPTIMIERTEN GEWINNUNG VON AMMONIUMSALZEN**
METHOD FOR ENERGY OPTIMIZED EXTRACTION OF AMMONIUM SALTS
PROCÉDÉ POUR LA PRODUCTION DE SELS D'AMMONIUM ÉNERGÉTIQUEMENT OPTIMISÉE

(30) Priorität: 10.08.2009 DE 102009036874
(43) Veröffentlichungstag der Anmeldung: 08.08.2012
(73) Patentinhaber: Verbio Vereinigte Bioenergie AG, 04109 Leipzig (DE)
(72) Erfinder: GRÜNWALD, Julia, 19205 Frauenmark (DE); LÜDTKE, Oliver, 04416 Markkleeberg (DE); NIESMANN, Theodor, 04105 Leipzig (DE); POLLERT, Georg, 13465 Berlin (DE)
(74) Vertreter: Kruspig, Volkmar
(86) Internationale Anmeldenummer: PCT/EP2010/059191
(87) Internationale Veröffentlichungsnummer: WO 2011/018269

(56) Entgegenhaltungen:
- EP-A1- 1 318 105
- WO-A1-2009/087507
- WO-A2-2004/012840

## Beschreibung

Die Erfindung betrifft ein Verfahren zur energetisch optimierten Gewinnung von Ammoniumsalzen aus Ammoniak oder Ammoniumverbindungen enthaltende Flüssigkeiten, wie Gülle, Abläufe von Biogasanlagen, kommunale und industrielle Abwässer oder Produkte, gemäß Oberbegriff des Patentanspruchs 1.

Aus dem Stand der Technik sind verschiedene Verfahren bekannt, die darlegen, wie aus organisch beladenen Strömen, z.B. landwirtschaftlichen Abfällen, nämlich Gülle und Jauche, Gärresten von Biogasanlagen oder kommunalen oder industriellen Abwasserströmen, Düngemittel bereitgestellt werden können.

Der überwiegende Teil des Standes der Technik beruht dabei auf der Zumischung von großen Mengen eines wasserbindenden Stoffes zu den flüssigen Abfallströmen.

So offenbart die DE 196 30 387 A1 ein Verfahren zur Herstellung eines Düngemittels aus Gülle mit verminderter Ammoniakfreisetzung durch eine chemische Reaktion von Gülle mit Humus.

Die EP 1 318 105 A1 beschreibt ein Verfahren zur Gewinnung von Ammoniumsalzen aus Ammoniak oder Ammoniumverbindungen enthaltenden Flüssigkeiten, bei dem die flüssige Phase einem Desorber-Stripp-Prozess unterzogen wird.

Die DE 101 20 372 A1 zielt auf eine Reaktion von Gülle mit Humus und Huminsäuren ab.

Nach der DE 44 44 726 C1 wird die Gülle durch Vermischung mit Tonmehl verfestigt und dann als landwirtschaftlicher Dünger eingesetzt.

Die DE 41 19 504 A1 offenbart ein Verfahren, wonach die Gülle mit Gips vermischt, getrocknet und dann zerkleinert wird.

Ein Verfahren ohne Trocknung, jedoch mit Abtrennung des bei der Mischung von Gülle und den Rückständen aus einer Rauchgasreinigungsanlage freiwerdenden Ammoniaks zeigt die DE 196 44 613 A1.

Ein weiterer Stand der Technik orientiert sich an der Gewinnung eines Düngers aus flüssigen Abfallströmen, und zwar dadurch, dass gezielt bestimmte Komponenten aus den Strömen abgetrennt werden.

So zeigt die DE 195 47 320 A1 ein mehrstufiges Verfahren sowie eine entsprechende Vorrichtung zur Erzeugung von ammoniakfreiem und sterilem Vollwertdünger aus biologischen Reststoffen. Die ausgegorenen Materialien werden dort mindestens eine Stunde auf Siedetemperatur erhitzt und das freigesetzte Ammoniak und andere flüchtige Stoffe werden dann mit Dampf ausgetragen.

Nach der DE 42 43 918 A1 wird fermentierte Gülle in einer Kolonne gekocht. Anschließend werden die austretenden ammoniak- und CO₂-haltige Dämpfe in einem Mischkondensator unter Bildung von Ammoniaksalzen kondensiert.

Die DE 43 04 342 A1 offenbart ein Verfahren, bei dem ein Düngemittel aus Klärschlamm hergestellt wird, indem eine Zumischung von Calciumsulfat erfolgt. Anschließend wird die Mischung granuliert und getrocknet.

Nach der DE 103 54 063 A1 ist ein Verfahren und eine Vorrichtung zur Gewinnung von Stickstoffdünger aus organischen Abfallprodukten vorbekannt. Dabei liegen die Abfallprodukte in flüssiger Phase vor. Die Behandlung erfolgt durch ein Verfahren, bei dem das Abfallprodukt bei Unterdruck auf Temperaturen zwischen 40°C und 90°C erhitzt wird. Das dabei entweichende Kohlendioxid und Ammoniak enthaltende Gas wird gekühlt in eine mineralischwässrige Gips-Suspension eingeleitet. Der hierbei gebildete Stickstoffdünger wird ausgetragen. Das nicht absorbierte und Kohlendioxid enthaltende Überschussgas wird in den Ablaufbehälter zurückgepumpt, wobei der zu Beginn des Prozesses durch eine Vakuumpumpe erzeugte Unterdruck durch den Verlauf des Prozesses autogen aufrechterhalten wird. Zur dortigen Vorrichtung gehört auch ein Strippbehälter für die Erwärmung unter Unterdruck sowie ein Vorlagegefäß für die Reaktion der heterogenen Phase sowie ein Wärmespeicher zum Wärmetausch.

Bei dem Verfahren zur Herstellung von Stickstoffdünger aus biogenen Stoffen nach DE 10 2006 015 496 A1 wird der aus vorgeschalteten Vergärungsfermentoren abgezogene Flüssigkeitsstrom zum Austreiben entstandener Gase mit Ultraschall beaufschlagt.

Gemäß DD 250 520 A1 erfolgt eine Behandlung von ammoniakhaltigen oder ammoniakabspaltenden fließfähigen Stoffen mit dosierten Mengen von Brannt- oder Löschkalk und Absorption des freigesetzten Ammoniaks. Das alkalische Stoffgemisch wird zur Vergrößerung des Oberfläche/Volumen-Verhältnisses über Kolonnenböden oder vertikal angeordnete, mit Zerteilelementen besetzte, rotierende Wellen geleitet und im Gegenstrom von Luft durchströmt.

Ein Problem bei den zitierten Verfahren des Standes der Technik besteht darin, dass selbige nicht ausreichend wirtschaftlich arbeiten, da grundsätzlich eine hohe Energiemenge benötigt wird. Außerdem ist die Konfektionierung von Ammoniak aus siedenden Dämpfen sehr problematisch, da sich bereits ab Temperaturen von <63°C sehr schnell Kristalle bilden, die entweder diskontinuierlich oder durch Spülungen entfernt werden müssen.

Bei einigen der bekannten Verfahren wird das Problem der nicht ausreichenden Wirtschaftlichtkeit dadurch reduziert, dass man Energieströme nutzt, die z.B. aus dem Kühlungswasser von Blockheizkraftwerken bezogen werden.

Die Lehre nach DE 102 10 985 A1 offenbart die Desorption von CO₂ aus einem ammoniumhaltigen Biogasablauf durch Erwärmen. Das dortige Ziel ist die Rückführung des mit dem CO₂ in die Gasphase ausgetretenen Ammoniaks in den Biogasablauf, da im weiteren Verfahren die Gewinnung einer hochkonzentrierten Ammoniumsalzlösung angestrebt wird.

Zur Reduzierung des Gehalts an Stickstoffverbindungen im Abwasser sind Verfahren der Nitrifizierung mit anschließender Denitrifizierung bekannt. Hierbei werden organische Stickstoffverbindungen weitgehend zu Ammonium abgebaut. Dieses Ammonium wird dann zusammen mit dem im Rohwasser vorliegenden Ammonium durch Belüftung in einem Belebtschlammbecken bakteriell zu Nitrat oxidiert und anschließend unter Abwesenheit von Luftsauerstoff zu elementarem Stickstoff reduziert, der dann als Gas aus der Flüssigkeit austritt.

Das vorstehend geschilderte Verfahren ist sehr aufwendig und widerspricht an sich ökologischem Denken, da dort Stickstoff in einer für die Pflanzen nutzbaren Form in eine inerte Form überführt wird, während üblicherweise auf entgegengesetztem Weg unter hohem Energieaufwand nach dem Haber-Bosch-Verfahren inerter Luftstickstoff in Stickstoffdünger umgesetzt wird.

Auch die vorstehend geschilderten Verfahrensweisen sind in energetischer Hinsicht sehr aufwendig oder es ist ein hoher Bedarf an wasserbindenen Zusatzstoffen nötig.

Aus dem Vorliegenden ist es daher Aufgabe der Erfindung, ein weiterentwickeltes Verfahren zur energetisch optimierten Gewinnung von Ammoniumsalzen aus biogenen Stoffen in flüssiger Phase, insbesondere Ammoniak oder Ammoniumverbindungen enthaltende Flüssigkeiten anzugeben, welches eine sichere und kontinuierliche Verfahrensführung ermöglicht.

Die Lösung der Aufgabe der Erfindung erfolgt mit einem Verfahren gemäß der Merkmalskombination nach Patentanspruch 1, wobei die Unteransprüche mindestens zweckmäßige Ausgestaltungen und Weiterbildungen darstellen.

Es wird demnach von einem Verfahren zur energetisch optimierten Gewinnung von Ammoniumsalzen aus biogenen Stoffen in flüssiger Phase, insbesondere Ammoniak oder Ammoniumverbindungen enthaltende Flüssigkeiten ausgegangen, wobei die Phase einem Desorber-Stripp-Prozess unterzogen wird. In der Stripp-Kolonne werden im Gegenstrom Brüden geführt. Der hierdurch mit Ammoniak angereichterte Brüdenstrom wird mit einer bevorzugt schwefelsauren Ammoniumsulfatlösung in einer Absorptionsstufe gewaschen, um Ammoniak vollständig in Ammoniumsalz umzuwandeln. Hierfür wird die Temperatur der Absorptionslösung auf einem solchen Bereich oder Wert gehalten, dass mindestens ein Teil des im Brüdenstroms enthaltenen Wasserdampfes austritt. Zweckmäßigerweise kann ausgestaltend die zu behandelnde Phase einem Vorstrippschritt unterzogen werden, in dem eine Teilmenge störender Gase wie CO₂ oder H₂S entfernt wird.

Ausgestaltend wird der die Absorptionsstufe verlassende Brüdenstrom in einen Desorber, einen Kreislauf bildend, zurückgeführt und dort als Desorptionsmedium genutzt.

Ein auftretender Druckverlust kann durch einen Brüdenverdichter kompensiert werden.

Der Desorber umfasst eine Gegenstromstrippkolonne, in der die zu strippende flüssige Phase auf den Kolonnenkopf aufgegeben, während der Brüdenstrom von unten der Kolonne zugeführt wird.

Die erwähnte Absorptionsstufe umfasst ausgestaltend eine Gegenstromkolonnenbehandlung.

Die Absorptionslösung kann einfach oder mehrfach kreislaufbildend auf den Kopf der Kolonne aufgegeben und der ammoniakhaltige Brüdenstrom der Kolonne von unten zugeführt werden.

Weiterhin erfindungsgemäß wird die Absorptionslösung auf ein vorgegebenes Konzentrationsniveau eingestellt und gehalten.

Zur Einstellung des Konzentrationsniveaus der Lösung wird einerseits Säure zugeführt und andererseits ein Teil der Lösung aus dem Prozess entfernt bzw. abgezogen.

Das Aufwärmen der zugeführten flüssigen Phase erfolgt energiereduzierend über einen Wärmetauscher oder eine Wärmetauscheranordnung, welcher bzw. welche vom Stripp-Ablauf durchströmt ist.

Das Entfernen störender Gase kann bei einer weiteren Ausgestaltung unter Vakuum vorgenommen werden.

Durch Zugabe mindestens eines alkalischen Stoffes wird das in der zu strippenden flüssigen Phase enthaltene, als Ammoniumsalz gebundene Ammoniak chemisch freigesetzt und anschließend physikalisch entfernt.

Zum Einstellen der Konzentration desorbierter Gase in dem Brüdenstrom kann ein Teilstrom abgezogen werden.

Bei einer Ausführungsform der Erfindung wird der umlaufende Brüdenstrom über einen Wascher geführt, um mittels einer alkalischen Lösung CO₂ des Brüdenstroms zu absorbieren und chemisch zu binden.

Mit der vorgestellten Erfindung gelingt es demnach, Ammoniumsalze aus Ammoniak bzw. Ammoniumverbindungen enthaltende Flüssigkeiten, wie z.B. Gülle, Abläufen von Biogasanlagen, kommunalen, gewerblichen und industriellen Abwasserströmen zu gewinnen.

Wie ansspruchsseitig erläutert, werden die Ammoniak und/oder Ammoniumverbindungen enthaltenden Flüssigkeiten in einen Desorber geführt, um das Ammoniak bzw. das Ammonium der Ammoniumsalze durch Gase, Dämpfe, Brüden oder Gemische hieraus abzustrippen. Der austretende Brüdenstrom wird in eine Absorptionsstufe geleitet, in der das freigesetzte Ammoniak durch eine wässrige, gegebenenfalls Säuren oder Salze enthaltende Lösung gebunden und damit in ein Ammoniumsalz umgesetzt wird. Die Temperatur der Absorptionslösung wird so eingestellt und gehalten, dass ein Teil oder die Gesamtmenge des im Brüdenstrom enthaltenen Wasserdampfes gasförmig aus der Absorptionsstufe austritt.

Die Desorption in der Gegenstromanlage, in der die zu desorbierende Flüssigkeit auf den Kopf der Kolonne aufgegeben wird, während der ammoniakhaltige Brüdenstrom von unten in die Kolonne einzuführen ist, ermöglicht bei minimalem Einsatz von Strippbrüden eine vollständige Abtrennung des Ammoniaks aus der aufgegebenen Flüssigkeit.

Grundsätzlich gibt es verschiedene Möglichkeiten, das in den Brüden enthaltene Ammoniak zu absorbieren. Dies kann z.B. durch Einbringen in eine Absorptionsflüssigkeit oder durch das Führen der Brüden durch einen Sprühturm erfolgen.

Ein Aspekt der Erfindung ist die Absorption des Ammoniaks in einer Gegenstromabsorptionskolonne. Dabei kann die Absorptionslösung entweder im einmaligen Durchlauf oder über einen Kreislauf auf den Kopf der Kolonne aufgegeben werden. Durch diese Maßnahme ergibt sich der Vorteil, dass nur ein geringer Druckverlust resultiert, mithin ein eingesetzter Verdichter weniger Leistung zu erbringen hat.

Das Abtreiben unerwünschten CO₂, teilweise zusammen mit Schwefelwasserstoffgas, durch Wärmebehandlung aus der zu strippenden Flüssigkeit gelingt besonders effektiv durch einen mehrstufigen Prozess, bei dem von Stufe zu Stufe die Temperatur der Lösung angehoben wird. Dabei verbleibt das Ammoniak weitgehend in der Lösung. Ein solcher Prozess ist auch unter Vakuum durchführbar, um die Energiebilanz zu verbessern.

Das Entfernen eines Teilstroms aus dem umlaufenden Brüdenstrom ist insofern vorteilhaft, weil im Desorber neben Ammoniak auch CO₂ und Schwefelwasserstoffgas freigesetzt wird, die bei einer zu hohen Konzentration die Freisetzung des Ammoniaks behindern. Der störende Effekt bedingt durch CO₂ kann auch dadurch reduziert oder eliminiert werden, dass in den umlaufenden Brüdenstrom ein Wascher mit einer alkalischen Lösung geschaltet wird.

Wenn die Absorptionslösung im gesättigten Zustand gehalten und ein Teil der Lösung diskontinuierlich oder kontinuierlich in einen Kristallisator abgezogen wird, in dem durch Abkühlen die Bildung von Kristallen erfolgt und diese dann abgetrennt werden, während die Mutterlösung in die Absorptionslösung zurückgeführt wird, ist eine weitere Energiereduzierung möglich, und zwar im Vergleich zu einer solchen Technik, bei der die Lösung zur Gewinnung von festem Ammoniumsalz einem Eindampfprozess unterliegt. Alternativ besteht die Möglichkeit, die Absorptionslösung übersättigt zu halten und die sich bildenden Kristalle diskontinuierlich oder kontinuierlich aus der Lösung abzutrennen. Auch dies stellt eine Optimierung des Prozesses bei gleichzeitig reduziertem Energieaufwand dar.

Die Erfindung soll nachstehend anhand eines Ausführungsbeispiels näher erläutert werden.

Der Ablauf aus einer Biogasanlage wird zunächst in einem ersten Wärmetauscher mit dem noch warmen gestrippten Ablauf aus dem Prozess auf 60°C bis 80°C vorgewärmt.

In einem ersten Flashapparat wird ein großer Teil des in der Lösung gelösten Kohlendioxids (CO₂) sowie Schwefelwasserstoff (H₂S) abgetrennt, so dass eine Behinderung des nachfolgenden Prozesses weitgehend vermieden wird.

Dies kann je nach Prozessführung bei leichtem Unter- bis leichtem Überdruck geschehen.

Die hierbei mitgeflashte Menge an Ammoniak (NH₃) ist vernachlässigbar gering.

Im zweiten Wärmetauscher wird die bereits teilentgaste Lösung mit dem Ablauf der Strippkolonne weiter auf ca. 80°C bis 95°C erwärmt.

Der zweite Flashapparat, welcher auch unter leichtem Unter- bis Überdruck betrieben werden kann, dient der Entfernung eines weiteren Anteils von CO₂ und H₂S. Auch hier werden nur geringe Mengen NH₃ mit dem CO₂ abgeflasht.

Nach der Vorbehandlung durch den zweiten Flashapparat wird die Lösung auf den Kopf der Strippkolonne gefahren, in die im Gegenstrom umlaufende Brüden aus dem Verdichter geleitet werden.

Das NH₃ im Ablaufwasser wird hierbei fast vollständig entfernt und reichert sich in den Brüden an.

Der Strippkolonne kann über eine Heizeinrichtung externe Wärmeenergie zugeführt werden.

Die Strippkolonne wird bei 90°C bis 110°C unter leichtem Unter- bis leichtem Überdruck betrieben. Dem Sumpf wird dazu Energie mit Hilfe der Wärmequelle zugeführt und ein geringer Teil des Ablaufs verdampft.

Die gestrippte Lösung verlässt die Strippkolonne und wird, wie bereits erläutert, den Wärmetauschern zugeführt, um eine energetische Nutzung der Wärmeenergie zu bewirken.

Der mit Ammoniak angereicherte Brüdenstrom, welcher die Strippkolonne am Kopf verlässt, wird nun in den unteren Teil eines Ammoniakwaschers geleitet und dort mit einer umlaufenden schwefelsauren Ammoniumsulfatlösung gewaschen.

Dabei wird das Ammoniak vollständig von der in der Umlauflösung befindlichen Schwefelsäure in Ammoniumsulfat umgesetzt.

Die nun NH₃-freien Brüden werden über den genannten Verdichter in die Strippkolonne zurückgeführt.

Die Ammoniumsulfatlösung wird am Sumpf des Waschers abgezogen und auf den Kopf des Waschers zurückgeführt.

Vorher wird eine Teilmenge der Ablauflösung ausgeschleust und dem Kreislauf Schwefelsäure zugeführt.

Durch die Reaktionswärme wird aus der Umlauflösung Wasser verdampft. Dieser Verlust wird durch den Wassergehalt der zugeführten Schwefelsäure ausgeglichen, so dass die Ammoniumsulfatkonzentration in der Lösung auf einem gewünschen Wert von ca. 38% bis 40% gehalten werden kann.

Das nach der zweiten Flashbehandlung noch in der Lösung verbliebene CO₂ wird in der Strippkolonne zusammen mit dem NH₃ aus der Lösung abgestrippt und reichert sich in den Brüden an. Aus diesem Grund wird aus dem umlaufenden Brüdenstrom eine Teilmenge abgezogen.

Das mit Hilfe der beschriebenen Prozessapparatur durchgeführte Verfahren zeichnet sich durch eine vollkontinuierliche Fahrweise aus, die mit geringen Investitionskosten bei sehr geringem Energieverbrauch in der Lage ist, Stickstoffdünger bereitzustellen.

Es bedarf nur einer sehr geringen von außen zugeführten Energiemenge, um mehr als 90% des Ammoniaks aus der flüssigen Phase abzutrennen, da der Wasserdampf im Kreislauf und das Ablaufsubstrat aus der Anlage im Gegenstrom zum zugeführten organischen Ablauf gefahren wird. Die zur Durchführung des Verfahrens einzusetzende Vorrichtung umfasst, wie erläutert, einen oder mehrere Wärmetauscher, einen Behälter oder eine Kolonne zum Entfernen des Ammoniaks durch Brüden, einen Verdichter, eine Absorptionskolonne, einen Wäscherbehälter sowie übliche Rohrleitungen, Absperrvorrichtungen sowie Steuerungs- und Regelungseinheiten.

Es sei an dieser Stelle noch angemerkt, dass es sinnvoll ist, mindestens eine Teilentgasung im Vorfeld der Ammoniakdesorption zu realisieren. Auch besteht die Möglichkeit, einen Teilstrom oder den Gesamtstrom über eine Abtrennvorrichtung, z.B. einen Dekanter zu fahren.

Wird der Teilstrom oder der Gesamtstrom der Absorptionslösung einem Abkühlungsschritt mittels z.B. Abkühlbehälter unterzogen, kann durch die Abkühlung Ammoniumsalz auskristallieren.

## Patentansprüche

1. Verfahren zur energetisch optimierten Gewinnung von Ammoniumsalzen aus Ammoniak oder Ammoniumverbindungen enthaltende Flüssigkeiten, wie Gülle, Abläufe von Biogasanlagen oder derartige Produkte
**dadurch gekennzeichnet, dass**
die flüssige Phase einem Desorber-Stripp-Prozess unterzogen wird, wobei in der Stripp-Kolonne im Gegenstrom Brüden geführt werden, weiterhin der hierdurch mit Ammoniak angereicherte Brüdenstrom mit einer wässrigen, Säuren und/oder Salze enthaltenden Lösung, insbesondere schwefelsauren Ammoniumsulfatlösung in einer Absorptionsstufe gewaschen wird, um Ammoniak vollständig in Ammoniumsalz umzusetzen und hierbei die Temperatur der Absorptionslösung so eingestellt und gehalten wird, dass ein Teil oder die Gesamtmenge des im Brüdenstrom enthaltenen Wasserdampfes gasförmig aus der Absorptionsstufe austritt.

2. Verfahren nach Anspruch 1,
**dadurch gekennzeichnet, dass**
der die Absorptionsstufe verlassende Brüdenstrom in den Desorber, einen Kreislauf bildend, zurückgeführt und dort als Desorptionsmedium genutzt wird.

3. Verfahren nach Anspruch 2,
**dadurch gekennzeichnet, dass**
der auftretende Druckverlust durch einen Brüdenverdichter kompensiert wird.

4. Verfahren nach einem der vorangegangenen Ansprüche,
**dadurch gekennzeichnet, dass**
der Desorber eine Gegenstromstrippkolonne umfasst, in der die zu strippende flüssige Phase auf den Kolonnenkopf aufgegeben, während der Brüdenstrom von unten der Kolonne zugeführt wird.

5. Verfahren nach einem der vorangegangenen Ansprüche,
**dadurch gekennzeichnet, dass**
die Absorptionsstufe eine Gegenstromkolonnenbehandlung umfasst.

6. Verfahren nach Anspruch 5,
**dadurch gekennzeichnet, dass**
die Absorptionslösung einfach oder mehrfach kreislaufbildend auf den Kopf der Kolonne aufgegeben und der ammoniakhaltige Brüdenstrom der Kolonne von unten zugeführt wird.

7. Verfahren nach einem der vorangegangenen Ansprüche,
**dadurch gekennzeichnet, dass**
die Absorptionslösung auf ein vorgegebenes Konzentrationsniveau eingestellt und auf diesem gehalten wird.

8. Verfahren nach Anspruch 7,
**dadurch gekennzeichnet, dass**
zur Einstellung des Konzentrationsniveaus der Lösung Säure einerseits zugeführt und andererseits ein Teil der Lösung aus dem Prozess entfernt wird.

9. Verfahren nach einem der vorangegangenen Ansprüche,
**dadurch gekennzeichnet, dass**
das Aufwärmen der zugeführten flüssigen Phase über eine Wärmetauscheranordnung erfolgt, welche vom Stripp-Ablauf durchströmt ist.

10. Verfahren nach einem der vorangegangenen Ansprüche,
**dadurch gekennzeichnet, dass**
durch Zugabe mindestens eines alkalischen Stoffes das in der zu strippenden flüssigen Phase enthaltene, als Ammoniumsalz gebundene Ammoniak chemisch freigesetzt und anschließend physikalisch entfernt wird.

11. Verfahren nach einem der Ansprüche 2 bis 10,
**dadurch gekennzeichnet, dass**
zum Einstellen der Konzentraton desorbierter Gase aus dem Brüdenstrom ein Teilstrom abgezogen wird.

12. Verfahren nach einem der Ansprüche 2 bis 11,
**dadurch gekennzeichnet, dass**
der umlaufende Brüdenstrom über einen Wascher geführt wird, um mittels einer alkalischen Lösung CO₂ des Brüdenstroms zu absorbieren und chemisch zu binden.

13. Verfahren nach einem der vorangegangenen Ansprüche,
**dadurch gekennzeichnet, dass**
die Absorptionslösung im gesättigten Zustand gehalten und ein Teil der Lösung diskontinuierlich oder kontinuierlich in einen Kristallisator abgezogen wird, in dem durch Abkühlen die Bildung von Kristallen hervorgerufen wird und diese Kristalle abgetrennt werden, während die Mutterlösung einer Zurückführung in die Absorptionslösung unterliegt.

14. Verfahren nach einem der Ansprüche 1 bis 12,
**dadurch gekennzeichnet, dass**
die Absorptionslösung übersättigt gehalten wird und die sich bildenden Kristalle diskontinuierlich oder kontinuierlich aus der Lösung abgetrennt werden.

15. Verfahren nach einem der vorangegangenen Ansprüche,
**dadurch gekennzeichnet, dass**
die Desorption oder der gesamte Desorptionskreislauf unter definierten Druckverhältnissen, auch umfassend ein Vakuum, durchgeführt wird.

16. Verfahren nach einem der Ansprüche 11 bis 15,
**dadurch gekennzeichnet, dass**
zur Aufrechterhaltung der notwendigen Prozeß- und Betriebstemperatur sowie der gewünschten Konzentration in der Absorptionslösung thermische Energie zuführbar ist.

17. Verfahren nach einem der vorangegangenen Ansprüche,
**dadurch gekennzeichnet, dass**
die zu behandelnde flüssige Phase einem oder mehreren Vorstrippschritten unterzogen wird, in dem eine Teilmenge störender Gase, mindestens jedoch des gelösten CO₂ und H₂S entfernt wird.

18. Verfahren nach Anspruch 17,
**dadurch gekennzeichnet, dass**
die Entgasung im Vorstrippschritt unter Vakuum durchgeführt wird.

## Claims

1. A method for energy-optimized extraction of ammonium salts from liquids containing ammonia or ammonium compounds, such as liquid manure, biogas plant effluents, or similar products, **characterized in that** the liquid phase is subjected to a desorber stripping process, wherein vapours are fed into the stripping column in counter-flow, and the vapour stream thereby enriched with ammonia is scrubbed in an absorption stage with an aqueous solution containing acids and/or salts, in particular ammonium sulphate solution containing sulphuric acid, in order to fully convert ammonia to ammonium salt, and during this the temperature of the absorption solution is adjusted and maintained in such a way that some or all of the water vapour contained in the vapour stream exits from the absorption stage in gas form.

2. The method according to claim 1, **characterized in that** the vapour stream leaving the absorption stage is fed back into the desorber, thereby forming a loop, and is used therein as a desorption medium.

3. The method according to claim 2, **characterized in that** the pressure loss that occurs is compensated by a vapour compressor.

4. The method according to any of the preceding claims, **characterized in that** the desorber comprises a counter-current stripping column, into which the liquid phase to be stripped is fed at the top of the column while the vapour stream is fed into the column from below.

5. The method according to any of the preceding claims, **characterized in that** the absorption stage comprises a counter-current column treatment.

6. The method according to claim 5, **characterized in that** the absorption solution is fed into the top of the column one or more times, thereby forming a loop, and the ammonia-containing vapour stream is fed into the column from below.

7. The method according to any of the preceding claims, **characterized in that** the absorption solution is adjusted to a predefined concentration level and is maintained at said level.

8. The method according to claim 7, **characterized in that**, in order to adjust the concentration level of the solution, on the one hand acid is fed in and on the other hand a portion of the solution is removed from the process.

9. The method according to any of the preceding claims, **characterized in that** the heating of the supplied liquid phase takes place via a heat exchanger arrangement through which the stripping effluent flows.

10. The method according to any of the preceding claims, **characterized in that** the ammonia bound as ammonium salt and contained in the liquid phase to be stripped is chemically released by adding at least one alkaline substance and then is physically removed.

11. The method according to any of claims 2 to 10, **characterized in that**, in order to adjust the concentration of desorbed gases, a partial stream is drawn off from the vapour stream.

12. The method according to any of claims 2 to 11, **characterized in that** the circulating vapour stream is passed through a scrubber in order to absorb and chemically bind CO₂ from the vapour stream by means of an alkaline solution.

13. The method according to any of the preceding claims, **characterized in that** the absorption solution is kept in the saturated state and a portion of the solution is drawn off in a discontinuous or continuous manner in a crystallizer in which the formation of crystals is brought about by cooling and said crystals are separated off while the mother solution is fed back into the absorption solution.

14. The method according to any of claims 1 to 12, **characterized in that** the absorption solution is kept oversaturated and the forming crystals are separated off from the solution in a discontinuous or continuous manner.

15. The method according to any of the preceding claims, **characterized in that** the desorption or the entire desorption loop is carried out under defined pressure conditions, also including a vacuum.

16. The method according to any of claims 11 to 15, **characterized in that** thermal energy can be supplied in order to maintain the necessary process and operating temperature and also the desired concentration in the absorption solution.

17. The method according to any of the preceding claims, **characterized in that** the liquid phase to be treated is subjected to one or more pre-stripping steps, in which a partial quantity of disruptive gases, but at least the dissolved CO₂ and H₂S, is removed.

18. The method according to claim 17, **characterized in that** the degassing in the pre-stripping step is carried out under vacuum.

## Revendications

1. Procédé d'extraction énergétiquement optimisée de sels d'ammonium à partir de liquides contenant de l'ammoniac ou des composés d'ammonium, tels que du lisier, des effluents d'installation de biogaz ou des produits similaires,
**caractérisé en ce que**
l'on soumet la phase liquide à un processus de strippage par désorbeur, dans lequel des buées sont amenées en contrecourant dans la colonne de stripage, et de plus le flux de buées ainsi enrichi en ammoniac est lavé avec une solution aqueuse contenant des acides et/ou des sels, en particulier avec une solution sulfurique de sulfate d'ammonium dans un étage d'absorption, afin de transformer l'ammoniac complètement en sel d'ammonium, la température de la solution d'absorption étant dans ce cas réglée et maintenue de telle sorte qu'une partie ou la quantité totale de la vapeur d'eau contenue dans le flux de buées sort sous forme gazeuse hors de l'étage d'absorption.

2. Procédé selon la revendication 1,
**caractérisé en ce que** le flux de buées sortant de l'étage d'absorption est retourné dans le désorbeur en formant un circuit et y est utilisé en tant que fluide de désorption.

3. Procédé selon la revendication 2,
**caractérisé en ce que**
la perte de pression qui se produit est compensée par un compresseur de buées.

4. Procédé selon l'une des revendications précédentes,
**caractérisé en ce que**
le désorbeur comprend une colonne de stripage à contrecourant dans laquelle la phase liquide à stripper est introduite à la tête de la colonne, tandis que le flux de buées est amené à la colonne depuis le bas.

5. Procédé selon l'une des revendications précédentes,
**caractérisé en ce que**
l'étage d'absorption comprend un traitement de la colonne en contrecourant.

6. Procédé selon la revendication 5,
**caractérisé en ce que**
la solution d'absorption est introduite à la tête de la colonne en formant un circuit simple ou multiple, et le flux de buées contenant de l'ammoniac est amené à la colonne depuis le bas.

7. Procédé selon l'une des revendications précédentes,
**caractérisé en ce que**
la solution d'absorption est réglée à un niveau de concentration prédéterminé et elle est maintenue à celui-ci.

8. Procédé selon la revendication 7,
**caractérisé en ce que**
pour régler le niveau de concentration de la solution, on ajoute d'une part de l'acide et on enlève d'autre part une partie de la solution hors du processus.

9. Procédé selon l'une des revendications précédentes,
**caractérisé en ce que**
le réchauffement de la phase liquide ajoutée s'effectue par un ensemble échangeur de chaleur qui est traversé par les effluents de strippage.

10. Procédé selon l'une des revendications précédentes,
**caractérisé en ce que**
par addition d'au moins une substance alcaline, l'ammoniac contenu dans la phase liquide à stripper et lié sous forme de sel d'ammonium est libéré chimiquement et ensuite enlevé physiquement.

11. Procédé selon l'une des revendications 2 à 10,
**caractérisé en ce que**
pour régler la concentration de gaz désorbés, on enlève un flux partiel du flux de buées.

12. Procédé selon l'une des revendications 2 à 11,
**caractérisé en ce que**
le flux de buées circulant passe par un laveur afin d'absorber le CO₂ du flux de buées au moyen d'une solution alcaline et de le lier chimiquement.

13. Procédé selon l'une des revendications précédentes,
**caractérisé en ce que**
la solution d'absorption est maintenue à l'état saturé et une partie de la solution est transférée de façon discontinue ou continue vers un cristalliseur dans lequel la formation de cristaux est provoquée par refroidissement, et ces cristaux sont séparés tandis que la solution mère subit un recyclage vers la solution d'absorption.

14. Procédé selon l'une des revendications 1 à 12,
**caractérisé en ce que**
la solution d'absorption est maintenue à l'état sursaturé et les cristaux qui se forment sont séparés de façon discontinue ou continue hors de la solution.

15. Procédé selon l'une des revendications précédentes,
**caractérisé en ce que**
la désorption ou l'ensemble du circuit de désorption se déroule dans des rapports de pression définis, incluant également un vide.

16. Procédé selon l'une des revendications 11 à 15,
**caractérisé en ce que**
pour maintenir la température nécessaire de processus et de fonctionnement ainsi que la concentration désirée de la solution d'absorption, on peut injecter de l'énergie thermique.

17. Procédé selon l'une des revendications précédentes,
**caractérisé en ce que**
l'on soumet la phase liquide à traiter à une ou à plusieurs étapes de pré-strippage en enlevant une quantité partielle de gaz perturbants, au moins des CO₂ et H₂S dissous.

18. Procédé selon la revendication 17,
**caractérisé en ce que**
dans l'étape de pré-strippage on effectue le dégazage sous vide.
